# EUROPEAN PATENT APPLICATION

(11) **EP 4 333 385 A1**
(43) Date of publication of application: **06.03.2024**
(21) Application number: 22461601.1
(22) Date of filing: 31.08.2022
(51) Int. Cl.: H04L 12/64, H04L 43/10, H04L 45/125, H04L 45/00, H04L 69/14, H04L 12/54

(54) **METHOD, DATA PROCESSING DEVICE, COMPUTER PROGRAM AND COMPUTER-READABLE MEDIUM FOR ROUTING PACKETS IN A PACKET-SWITCHED NETWORK**

(71) Applicant: Link2net s.c., 30-427 Krakow (PL)
(72) Inventor: Wójcik, Robert, 30-457 Kraków (PL); Domzal, Jerzy, 32-020 Wieliczka (PL); Jurkiewicz, Piotr, 33-101 Tarnów (PL); Jaglarz, Piotr, 31-933 Kraków (PL); Rzepka, Michal, 36-145 Widelka (PL)
(74) Representative: Patpol Kancelaria Patentowa Sp. z o.o.

(57) **Abstract**

The invention relates to a method for routing packets in a packet-switched network, between the downstream network and multiple upstream networks, wherein the method comprises steps of: assigning dynamically changed weights to each upstream access network; selecting and assigning the upstream access network for each new data flow originating from the downstream network according to the relative weights assigned to each network; all subsequent packets of the data flow go through upstream network assigned for that flow until the flow terminates or the selected upstream access network loses connectivity.

The invention also relates to a computer program and a computer-readable medium comprising instructions which, when executed, cause to carry out the steps of the method for routing packets in a packet-switched network.

## Description

### Field of the invention

The present invention relates generally to routing in a packet-switched network. More particularly, the present invention relates to the dynamic and adaptive selection of upstream network connection for subsequent flows arriving at the router.

### Background of the invention

A router is a device that forwards packets between computer networks. This means that the router is connected to at least two different Internet Protocol (IP) networks. When a data packet comes from one of them, the router reads the network address information from the packet header to determine the ultimate destination. Then, according to the information about which destination can be achieved through each of the connected networks, stored in the so-called routing table, it directs the packet to the next network on its path.

The most familiar types of IP routers are home and small office routers, which simply forward IP packets between the devices in the end-user local area network (LAN) and the Internet. A router that connects a LAN with the Internet or a wide area network (WAN) is also called a gateway router. The WAN is a computer network operated by an Internet service provider.

Typical home and small office routers do not forward packets independently from each other, based solely on the routing table, but operate on groups of packets called flows. A flow could correspond to a single TCP or UDP connection, all IP traffic between particular hosts, or even coarser levels of aggregation. In the case of home or small office class routers, routing is typically performed on flows corresponding to TCP connections and UDP sessions.

Home and small office routers typically maintain a list of connections established through them. When the first packet of a new flow is forwarded through a router, a new entry for that connection is created in the router's memory. It contains the original source and destination IP addresses and ports, as well as their translations. This allows a router to perform network address translation (NAT), as well as to protect from unsolicited access from WAN to hosts in LAN (that is, to provide the firewall functionality). NAT is a technique for converting private addresses of a LAN network into an address of a WAN network. For packets outgoing from LAN to the Internet, the NAT translates the private source IP address into the public IP address of the router's WAN network. To support multiple LAN devices, the source TCP or UDP port is also translated.

A typical downstream network is connected to just one Internet service provider (ISP) network. Connecting to multiple networks can increase reliability because when one connection fails, packets would still be routed through the remaining connections. Connecting a host or a computer network to more than one network is called multi-homing.

A router must have at least two WAN networks and at least one LAN network to perform multi-homing. These networks do not have to be homogeneous. For example, one WAN network can be connected to the Ethernet cable provided by an ISP, whereas another WAN network can be a wireless modem connected to a cellular mobile network. In such a case, a cellular connection can serve as a backup connection, activated when the primary wired ISP connection fails.

Multiple upstream connections could also be used to improve performance. Transmitting and receiving data through multiple connections simultaneously would effectively multiply the achievable throughput. Also, depending on the upstream network congestion, signal strength, or particular destination, it may be more efficient to route the connection through one network or the other.

Corporate and operator devices naturally use multiple networks to forward traffic at the same time. This is possible due to routing protocols that run in the network, such as e.g. BGP that always find the best path to a certain destination. However, home-grade routers are never connected to instances of routing protocols in the operators network for practical reasons. This means that classical, most common network selection is not possible in a home-grade router.

### State of the art

Majority of available home and small office routers do not support any kind of multi-homing. Some ASUS routers, e.g. GT-AX11000 are an exception. They allow to configure a secondary WAN network either on one of Ethernet LAN networks or on a connected USB cellular modem. Multi-homing in these ASUS routers can work in two modes: Load Balance and Fail Over. In Load Balance mode a user specifies load ratio between two WANs and the router splits new connections according to these ratios. In Fail Over mode, only a primary WAN is used. The router periodically sends DNS requests on the primary WAN and when it detects the primary WAN fail, it switches to the secondary WAN. The mentioned ratios are configured and therefore static, meaning that they do not change over time. Present invention allows to dynamically adjust these ratios according to current network conditions.

OpenWRT additional package mwan3 provides similar functionalities. It supports both ratio-based static load balancing and Fail Over. mwan3 also allows to construct more advanced configurations, in which WAN is being selected according to source IP, destination IP, source port(s), destination port(s) or type of IP protocol (policy-based routing). Similarly to ASUS products, the mentioned ratios are configured and therefore static, meaning that they do not change over time.

US9806994B2 describes a network device which routes traffic via multiple paths. The patent description is general and therefore could be applied to both for home and carrier grade routers. However, the routing is done on subnet (destination-address group) level and an output port is being selected from multiple output ports by hashing packet contents.

The patent US9225630B2 describes a method to establish a multipath connection (using for example MPTCP) between a device and an MP-capable server. In the example presented in the patent, the mobile end device uses its cellular connection and WiFi connection to home/router gateway in order to the establish a two path connection. The gateway router itself is not multi-homed.

US7619982B2 describes the method of sending probe packets to a target network using a specific exit at the source node. However, the patented method is obvious to the person skilled in the art and the patent does not specify how to make use of received reply packets.

On the other hand, the US7280547B2 patent describes a method for automatic identifying which networks are WAN and LAN ports by attempting to access a remote server.

The JP2011120083A describes a multi-homed router. However, it does not perform NAT. Instead, the router uses BGP on the remote side and sends a DHCP RECONFIGURE message to hosts on the local side to change their IP addresses whenever BGP-preferred access network changes.

US20100121946A1 describes a networking device and method to select an access network from multiple access networks connected to the destination network. It broadcasts a request for an access to the network to all said networks simultaneously and selects the network which responds first. For this invention to work, it is assumed that the device is composed of "identical interfaces", meaning it is necessary for interfaces to be similar for this solution, it also means the amount of traffic does not depend on the current device and state of the networks. The invention tries to distinguish between LAN and WAN interfaces and to determine which is which - interfaces are not preconfigured.

As can be seen from the above, there are only a few solutions that allow to use two or more WAN connections to transmit traffic simultaneously on a home-grade router. However, none of them allows to choose a currently best network. Known solutions can statically configure ratios such that e.g. two WAN networks are chosen as equally frequent or with a preference

Therefore, the problem to be solved by the invention is to provide a method for dynamically and adaptively selecting an upstream network for subsequent connections in a multi-home environment according to current network conditions. The goal of the invention is to allow the use of multiple upstream connections simultaneously, effectively multiplying achievable throughput.

### Summary

According to the first aspect of the invention herein is disclosed the method for routing packets in a packet-switched network, between the downstream network and multiple upstream networks, comprising steps of:
- assigning weights to each upstream access network, where the weights are dynamically changed according to the upstream network condition;
- selecting and assigning the upstream access network for each new data flow originating from the downstream network according to the relative weights assigned to each network;
- establishing connection with selected upstream access network to enable data flow of subsequent packets;
- all subsequent packets of the data flow go through that established connection until the flow terminates or the selected upstream access network loses connectivity.

Preferably, the network condition is being determined by sending probe packets and seeking response packets, where no response or response time higher than that from other networks or than previous response time from that network, results in the relative weight of the probed network being lowered by a factor or a set value, wherein the factor or the set value is assigned to the specific network at the time of the assigning weights and is determined by time of the response or lack of the response.

Preferably, probe packets are being sent to upstream access networks, when a new data flow originating from the downstream network is noticed and when no new flows arrive from the downstream network, no probe packets are being sent.

Preferably, weights of access networks are being gradually restored to the initial values, when no probe packets are being sent for some period of time and/or no information about upstream connections state is available, wherein the period of time comprises between 2-19 seconds.

Preferably, probe packets are Internet Control Message Protocol, ICMP, ping requests or Transmission Control Protocol synchronization segment, TCP SYN, requests.

Preferably, the downstream network is Local Area Network and upstream access network is Wide Area Network.

Preferably, the step of assigning weights comprises:
- after receiving a new flow from downstream network, checking whether the last probe packet was sent more than a predetermined time Tx ago;
- if said probe packet was sent more than said predetermined time Tx ago, sending simultaneously the same probe packet to each upstream network, and otherwise ending the step of assigning weights;
- after sending said probe packet, if response was received during the predetermined time Ty, raising relative weight of access network from which response was received and/or reducing weights of other upstream networks, and otherwise ending the step of assigning weights;
- checking if there was another response received during remaining time Ty;
- if said another response was received during said remaining time Ty, setting weights of upstream networks from which responses were received inversely proportional to relative response times, otherwise ending the step of assigning weights;
- checking whether the remaining time Ty passed;
- if no new response was received during said time Ty, ending the step of assigning weights; otherwise returning to sub-step of checking if there was another response received during remaining time Ty.

Preferably, if no new flow was received from downstream network during predetermined time Tz, the step of assigning weights comprises gradually restoring weights of each upstream network to the initial value.

According to the second aspect of the invention, a data processing device comprising means for carrying out the steps of the method according to the invention is provided.

Preferably, the data processing device comprises:
- at least one downstream network interface, in the case of more downstream interfaces, interfaces are connected by a switch;
- routing table;
- connection table;
- at least two upstream access network interfaces.

Preferably, the downstream interface is LAN interface, the upstream access network interfaces are WAN network interfaces or modems.

According to the third aspect of the invention, a computer program is provided, comprising instructions, which when executed by a computer cause the computer to carry out the steps of the method for routing packets in a packet-switched network according to the invention.

According to the fourth aspect of the invention. a computer-readable medium comprising instructions which, when executed by a computer, cause the computer to carry out the steps of the method according to the invention is provided.

### Brief description of the drawings

The method for routing packets in a packet-switched network, between the downstream network and multiple upstream networks, the data processing device, the computer program and the computer-readable medium are presented in details within the embodiments with reference to the attached drawings, in which:
Fig. 1 is a block diagram that presents main components of the data processing device, as well as flow of the first packet of a new flow thorough the router.
Fig. 2 is a block diagram that illustrates the flow of subsequent flow packets through the data processing device.
Fig. 3 shows flow charts that present the step of adaptive upstream networks weights changing.

### Detailed description

The present invention relates to routing of the packets between the downstream network and multiple upstream networks. Exemplary embodiments of the invention are described below, merely to better explain the invention and not to determine the scope of said invention.

The method according to the invention is envisioned for routing packets in a packet-switched network, between the downstream network and multiple upstream networks, wherein the method comprises: dynamical change of upstream access network assigned weights according to the upstream network condition; selection and assignation of said networks for each new data flow originating from the downstream network, wherein the assignation depends on relative weights of each network; establishment of the connection with selected upstream access network to enable data flow of the packets and transfer of all subsequent packets of the data flow through that established connection, either until the termination of the flow or the loss of connectivity with access network.

Said network condition is being determined by sending probe packets and seeking response packets. In case where no response or response time is higher than that from other networks or than previous response time from that network, the relative weight of the probed network is lowered by a factor or a set value, wherein the factor or the set value is assigned to the specific network at the time of the assigning weights and is determined by time of the response or lack of the response.

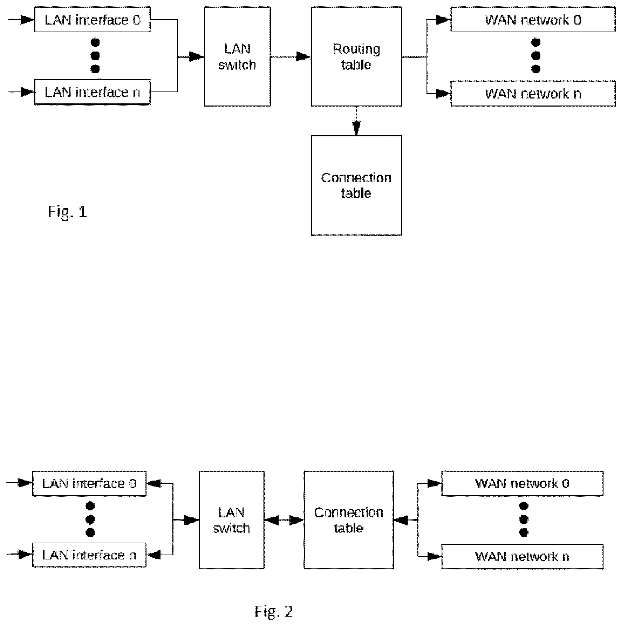

The specific instances and embodiments of the invention are presented on the fig. 1-3.

Fig. 1 illustrates a blog diagram on which main components of the data processing device are represented. The data processing device comprises means for carrying out the steps of the method for routing packets in a packet-switched network. The person skilled in the art will recognize, that other elements may be added to the data processing device, which would not invalidate the scope of this protection, as the elements represented are crucial and necessary for the operation of the device, while the others are merely different configurations of the device.

In one embodiment, the device comprises one or more LAN networks (also called downstream interfaces or downstream networks), a routing table, a connection table for established TCP connections and UDP sessions and at least two WAN networks (upstream interfaces or upstream networks). The router is connected to at least two WAN networks, which can be wired or wireless networks connected either directly or through modems.

If there is more than one LAN network, said networks are connected by a LAN switch.

In one embodiment, WAN networks are selected adaptively, that is, the selection depends on the state of the connections - when an upstream connection is more congested, it is selected with lower probability and when the connectivity with the connection is lost, it will not be selected until the connectivity is re-established.

The routing table stores information about which destinations can be achieved through which WAN network. In one embodiment, the routing table stores weights assigned to each WAN network.

Alternatively, the weights are a part of a program or script which steers packets inside the router. Initial weights values can be set by the user, determined automatically depending on the network type or speed, or simply set by default to be equal for all networks.

According to the invention, when the first packet of a new flow arrives on a LAN network, the WAN network is determined according to the routing table and relative weights of these WAN networks. Subsequently, a connection entry is created in the connection table for that connection, containing source and destination IP addresses and ports, their translations, and an indicator of the WAN network selected for that flow.

Fig. 2 illustrates a route (flow) of subsequent packets after the connection is established. When a packet arrives on a LAN network, its destination WAN network is determined according to a connection entry (a database record comprising information about current connection), stored in the connection table: the device locates in the connection table specific entry concerning the data flow and subsequently derives relevant information from said entry. Additionally, network address translation (NAT) is performed accordingly to the connection entry. The same happens for packets of that connection arriving from the WAN network to the router. They are forwarded to the appropriate LAN device according to the connection entry.

After the WAN network is determined (assigned) all subsequent packets of this flow go through that upstream network until the flow terminates or the selected network loses connectivity. In such cases, the flow entry is removed from the router's memory.

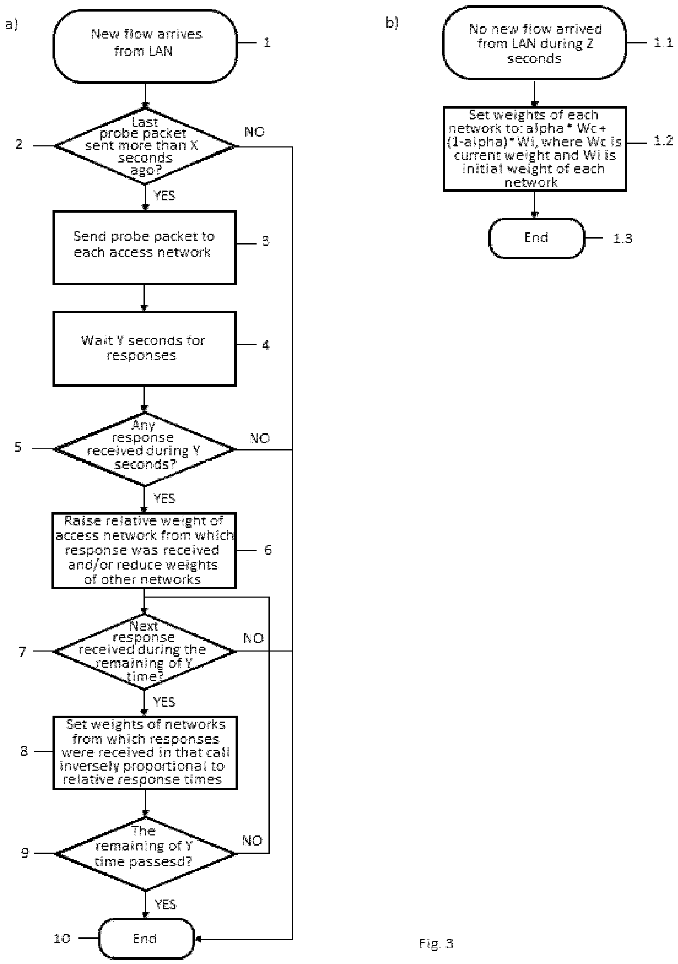

Fig. 3 a) illustrates the step of assigning weights, comprising following sub-steps: when a flow, that was not previously present in the connection table, arrives (sub-step 1) at the router device in LAN, there is executed a sub-step (sub-step 2) of checking, whether the last batch of probe packet was sent more than Tx time ago. Tx can preferably be equal to 2 s.

If the probe packet was sent less than Tx ago, it means that the information about the upstream network condition is up to date and the step of assigning weights proceeds to the end 10.

If there was no new probe packet within the predefined time Tx, the sub-step of network probing is triggered (sub-step 3), meaning probe packets are being sent to upstream access networks, when a new data flow originating from the downstream network is noticed. In this sub-step a single probe packet is sent to each upstream network, simultaneously. In one embodiment, these probe packets can be, for example, ICMP ping requests or TCP SYN requests.

Then a waiting sub-step is commenced (sub-step 4), which lasts a predefined time Ty, that preferably is equal to 2 s.

If there was no response during this predefined time Ty (sub-step 5), the step of assigning weights proceeds to the end 10, with no change in weights.

If there was a response within the predefined time Ty (sub-step 5), the sub-step of first weight change is triggered (sub-step 6).

During the sub-step of first weight change (sub-step 6), the weight of the upstream network which responded first is being raised. Alternatively, the same can be achieved by reducing the weights of all other upstream networks.

After the first weight change is done, the second waiting step (sub-step 7) is commenced, which lasts the remaining time Ty.

If there was no response during this remaining time, the step of assigning weights proceeds to the end 10, with no further change in weights.

If there was a response within that remining time Ty, the step of subsequent weight change (sub-step 8) is started, to reflect the responses of other upstream networks, similarly to the changes done in first step of weight change (sub-step 6).

The waiting step and the weight change step are repeated until the end of the predefined time Ty, meaning, there is executed a sub-step (sub-step 9) of checking whether the remaining time Ty passed. If the remaining time Ty passed, the step of assigning weights proceeds to the end 10. If the remaining time Ty does not pass, the step of subsequent weight change (sub-step 8) is repeated.

As illustrated in fig. 3 b), when there is no new flow to arrive to the router during a predefined time Tz (sub-step 1.1), all the networks are gradually restored to their initial values (sub-step 1.2) and the step of assigning weights proceeds to the end (sub-step 1.3). The period of time Tz comprises between 2-19 seconds, preferably 4 s. The restoration may be done in different ways. In one embodiment, an exponential weighted moving average is used, which takes as an input initial weights (Wi), current weights (Wc) and α parameter, that is smoothing parameter, used in exponential weighted moving average. The α can preferably be equal to 0.5.

To save network bandwidth and energy, probe packets are not being sent when there are no new flows incoming to the device. Additionally, when no probe packets are being sent, and thus no information about upstream connections state is available, weights are being gradually restored to the initial values. When no new flows arrive from the downstream network - no probe packets are being sent.

The changing of weights, sub-steps 6 and 8, may be implemented in different ways determined and specific for given upstream networks.

In one embodiment, weights are stored as double-precision floating point values. When the first response arrives, for the step of first weight change (sub-step 6), the weight of the upstream network from which the response arrived, is divided of this network by sqrt(response time) and the weights of all other upstream networks by sqrt(Ty). As response times are always lower than Ty timeout, such an operation results in the relative weight of the responding upstream network being raised compared to the others. When the second response arrives, for the step of subsequent weight change (sub-step 8), the weight of the upstream network from which the response arrived is first multiplied by sqrt(Ty) and then divided by sqrt(response time). This way, after receiving replies from all upstream networks, the weights of all of them have been divided by sqrt(response time). This means that higher response times result in relative weight being lowered.

Substantially, in the step of assigning weights, lack of response or higher response time than from other upstream networks results in the relative weight of the probed upstream network being lowered (alternatively, weights of other upstream networks being raised). Response time can also be compared to the previous response time from that upstream network instead of the response times of other upstream networks. A higher response time than previously observed would indicate deteriorating upstream network conditions.

The table below presents an example sequence of dynamic weight adaptation step. In the embodiment, initial input weighs are set to be equal for both WAN networks (network wan0 and network wan1). When a new flow arrives, router simultaneously sends ping requests on both networks (wan0, wan1). After that, the new flows are still being split equally between networks (wan0, wan1). The first response arrives on the network wan0 after 35 ms. The initial weight of that network wan0 is divided by sqrt(0.035), whereas weight of network wan1, which have not received response yet, is divided by sqrt(Ty=2). After that, weights of WAN networks (wan0, wan1) are 267 and 35, respectively, which means that 88% of new flows are being assigned to network wan0 and remaining 12% to network wan1. Ultimately, response from network wan1 is received after 70 ms. Weight of that network wan1 is first multiplied by sqrt(Ty=2) and then divided by sqrt(0.070). This sequence of operations changes weight of the network wan1 to 199, which means that 57% of new flows will be assigned to network wan0, and remaining 43% to network wan1.

**Table 1**

| | wan0 | wan1 |
|---|---|---|
| Initial weights | 50 (50%) | 50 (50%) |
| Response from wan0 received after 35 ms | 267 (88%) | 35 (12%) |
| Response from wan1 received after 70 ms | 267 (57%) | 199 (43%) |

In one embodiment, the above described method for routing packets in a packet-switched network is coded in computer program instructions which - when said program is executed by a computer, cause the computer to carry out the steps of said method.

In one embodiment, steps of above described method for routing packets in a packet-switched network are stored on a computer-readable medium that comprises instructions which, when executed by a computer, cause the computer to carry out the steps of said method.

Aspects of the present invention can be realized: by a computer of a system or an apparatus (or other devices such as a CPU or MPU), that reads out and executes a computer program product recorded on a memory device, to perform the functions of the above-described embodiment(s); and by a method, the steps of which are performed by a computer of a system or apparatus by, for example, reading out and executing a program recorded on a memory device to perform the functions of the above-described embodiment(s). For this purpose, the claimed computer program product is provided to the computer, for example via a network or from a recording medium of various types serving as the memory device. The computer program product according to the invention comprises also a non-transitory machine-readable medium (for example a router memory).

All above mentioned embodiments can apply to the computer program and the computer-readable medium.

All the above embodiments pertain to the method executed on a router (also called a device or data processing device), however, person skilled in the art will understand, that the invention is not limited to said router, but can be implemented on any device suitable or configurable for routing packets. If there is a reference to the network in the description, this should also be considered a reference to the interface, since the network can also be understood here as an interface. The steps of the method disclosed herein do not have to be performed in the exact order disclosed, unless a step is explicitly described as following or preceding another step and/or where it is implicit that a step must follow or precede another step.

It should be understood that the present invention is not limited to the above embodiments. Various modifications and changes may be made to these embodiments without departing from the broader spirit and scope of the invention. Accordingly, the specification and drawings are to be regarded in an illustrative rather than a restrictive sense. The accompanying drawings that form a part hereof, show by way of illustration, and not of limitation, specific embodiments in which the subject matter may be practiced. The embodiments illustrated are described in sufficient detail to enable those skilled in the art to practice the teachings disclosed herein. Other embodiments may be utilized and derived therefrom, such that structural and logical substitutions and changes may be made without departing from the scope of this disclosure. This Detailed Description, therefore, is not to be taken in a limiting sense, and the scope of various embodiments is defined only by the appended claims, along with the full range of equivalents to which such claims are entitled.

The list of abbreviations:
- LAN: Local Area Network
- WAN: Wide Area Network
- IP: Internet Protocol
- TCP: Transmission Control Protocol
- UDP: User Datagram Protocol
- NAT: Network Address Translation
- ISP: Internet Service Provider
- ICMP: Internet Control Message Protocol
- TCP SYN: TCP synchronization segment (segment with SYN flag enabled)
- BGP: Border Gateway Protocol

## Claims

1. Method for routing packets in a packet-switched network, between the downstream network and multiple upstream networks, **characterized in that** the method comprises:
- assigning weights to each upstream access network, where the weights are dynamically changed according to the upstream network condition;
- selecting and assigning the upstream access network for each new data flow originating from the downstream network according to the relative weights assigned to each network;
- establishing connection with selected upstream access network to enable data flow of subsequent packets;
- all subsequent packets of the data flow go through that established connection until the flow terminates or the selected upstream access network loses connectivity.

2. Method according to claim 1, **characterized in that** network condition is being determined by sending probe packets and seeking response packets, where no response or response time higher than that from other networks or than previous response time from that network, results in the relative weight of the probed network being lowered by a factor or a set value.

3. Method according to claim 2, **characterized in that** the factor or the set value is assigned to the specific network at the time of the assigning weights and is determined by time of the response or lack of the response.

4. Method according to any one of the preceding claims 1-3, **characterized in that** probe packets are being sent to upstream access networks, when a new data flow originating from the downstream network is noticed and when no new flows arrive from the downstream network - no probe packets are being sent.

5. Method according to any one of the preceding claims 1-4, **characterized in that** weights of access networks are being gradually restored to the initial values, when no probe packets are being sent for some period of time and/or no information about upstream connections state is available.

6. Method according to claim 5, **characterized in that** the period of time comprises between 2-19 seconds.

7. Method according to any one of the preceding claims 1-6, **characterized in that** probe packets are Internet Control Message Protocol, ICMP, ping requests or Transmission Control Protocol synchronization segment, TCP SYN, requests.

8. Method according to any one of the preceding claims 1-7, **characterized in that** the downstream network is Local Area Network and upstream access network is Wide Area Network.

9. Method according to any one of the preceding claims 1-8, **characterized in that** step of assigning weights comprises:
- after receiving a new flow from downstream network, checking whether the last probe packet was sent more than a predetermined time Tx ago;
- if said probe packet was sent more than said predetermined time Tx ago, sending simultaneously the same probe packet to each upstream network, and otherwise ending the step of assigning weights;
- after sending said probe packet, if response was received during the predetermined time Ty, raising relative weight of access network from which response was received and/or reducing weights of other upstream networks, and otherwise ending the step of assigning weights;
- checking if there was another response received during remaining time Ty;
- if said another response was received during said remaining time Ty, setting weights of upstream networks from which responses were received inversely proportional to relative response times, otherwise ending the step of assigning weights;
- checking whether the remaining time Ty passed;
- if no new response was received during said time Ty, ending the step of assigning weights; otherwise returning to sub-step of checking if there was another response received during remaining time Ty.

10. Method according to any one of the preceding claims 1-9, **characterized in that** if no new flow was received from downstream network during predetermined time Tz, the step of assigning weights comprises gradually restoring weights of each upstream network to the initial value.

11. A data processing device comprising means for carrying out the steps of the method of any of the claims 1-10.

12. The data processing device according to claim 11, **characterized in that** the data processing device comprises:
- at least one downstream network interface, in the case of more downstream interfaces, interfaces are connected by a switch;
- routing table;
- connection table;
- at least two upstream access network interfaces.

13. The data processing device according to claim 11 or claim 12, **characterized in that** the downstream interface is LAN interface, the upstream access network interfaces are WAN network interfaces or modems.

14. A computer program comprising instructions which, when the program is executed by a computer, cause the computer to carry out the steps of the method of any of the claims 1-10.

15. A computer-readable medium comprising instructions which, when executed by a computer, cause the computer to carry out the steps of the method of any of the claims 1-10.
